Europäisches Patentamt

European Patent Office

Office européen des brevets

(11) Publication number: **0 132 382**
**B1**

(12) **EUROPEAN PATENT SPECIFICATION**

(45) Date of publication of patent specification: **20.06.90**

(21) Application number: **84304925.5**

(22) Date of filing: **19.07.84**

(51) Int. Cl.⁵: **H 04 B 1/10, H 04 N 5/44,
H 01 Q 1/12**

(54) Direct satellite broadcast receiving system.

(30) Priority: **21.07.83 JP 113542/83**

(43) Date of publication of application:
**30.01.85 Bulletin 85/05**

(45) Publication of the grant of the patent:
**20.06.90 Bulletin 90/25**

(84) Designated Contracting States:
**DE FR GB NL**

(56) References cited:
**EP-A-0 038 726
US-A-3 671 969
US-A-3 710 016**

**IEEE TRANSACTIONS ON CONSUMER
ELECTRONICS, vol. CE-25, no. 5, November
1979, pages 765-771, IEEE, New York, US; R.H.
BAER: "Innovative add-on TV products"
NEC RESEARCH & DEVELOPMENT, no. 50, July
1978, pages 51-60; F. YAMASHITA et al.: "14/12
GHz-band mobile-type earth station for
Japanese broadcasting satellite communication
system"**

(73) Proprietor: **SONY CORPORATION
7-35 Kitashinagawa 6-Chome Shinagawa-ku
Tokyo 141 (JP)**

(72) Inventor: **Hayashi, Toshihide c/o Sony
Corporation
Patents Division 7-35 Kitashinagawa 6-chome
Shinagawa-ku Tokyo (JP)**

(74) Representative: **Thomas, Christopher Hugo
et al
D Young & Co 10 Staple Inn
London WC1V 7RD (GB)**

Courier Press, Leamington Spa, England.

## Description

This invention relates to direct satellite broadcast receiving systems. Embodiments of the invention form direct satellite broadcast receiving systems capable of efficiently adjusting the receiving direction of their antenna for receiving a satellite broadcast signal without using any special measuring apparatus in effecting the adjustment.

Recently, a satellite television broadcast system has been realized using an artificial satellite in a sationary orbit. The satellite broadcast signal used is an electrical wave in the superhigh frequency (SHF) band, for example, about 12 GHz on which a television signal is frequency modulated (FM).

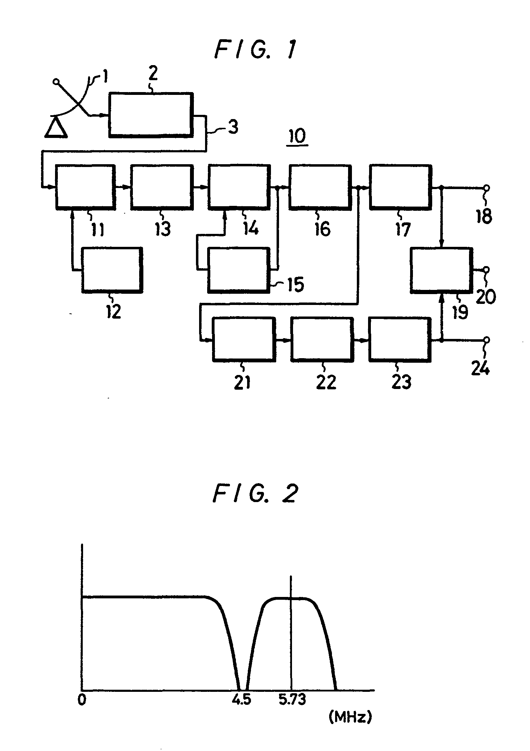

Figure 1 of the accompanying drawings is a block diagram of an example of a previously proposed receiving system for an SHF satellite television broadcast signal.

The transmitted SHF signal is formed as follows. A television audio signal is converted to a pulse code modulated (PCM) signal, and the PCM audio signal is divided into blocks of predetermined length and has an error correction code added thereto. The PCM signal is then 4-phase phase-shift-keying modulated on a sub-carrier of frequency 5.73 MHz to form a signal located on the higher frequency side of an analog video signal as shown in Figure 2 of the accompanying drawings. The modulated PCM signal and the analog video signal are combined, and then the combined signal is frequency modulated to form the SHF signal of frequency about 12 GHz.

This SHF broadcast signal is recieved by a parabolic receiving antenna 1 of the receiving system shown in Figure 1. The received SHF signal is supplied by the antenna 1 to an outdoor unit or S-U converter 2 in which it is converted in frequency to a signal in the ultrahigh frequency (UHF) band of, for example, about 1 GHz to form a first intermediate frequency signal. The UHF band signal is supplied through a coaxial cable 3 to a tuner 11 in an indoor unit 10. The tuner 11 receives from a channel-selecting circuit 12 a channel-selecting signal corresponding to a channel selected by a viewer. As a result, the tuner 11 derives a broadcast signal (UHF signal) which corresponds to the selected channel and is converted to a second intermediate frequency signal. The second intermediate frequency signal is supplied through a band-pass filter 13 to a second intermediate frequency amplifier 14. The output from the amplifier 14 is supplied to an automatic gain control (AGC) voltage detecting circuit 15 which produces an AGC voltage. This AGC voltage is fed back to the amplifier 14 so that the amplifier 14 is controlled to make its output constant.

The output from the amplifier 14 is supplied to an FM demodulating circuit 16 for frequency demodulation. The demodulated output therefrom is supplied to a video amplifier 17 so that a video signal is derived and supplied to an output terminal 18.

The output from the FM demodulating circuit 16 is also supplied to a band-pass filter 21 from which an autio sub-carrier component is extracted. This audio sub-carrier component is supplied to a 4-phase phase-shift-keying signal demodulating circuit 22, in which the audio PCM signal is demodulated and fed to a digital decoder 23. In the digital decoder 23, after error correction of the PCM signal using the error correction code, the PCM signal is restored to the original time series and then reconverted to the analog audio signal. The analog audio signal from the digital decoder 23 is supplied to an audio output terminal 24.

The audio signal from the digital decoder 23 and the video signal from the video amplifier 17 are also both supplied to an amplitude modulation (AM) modulating circuit 19 which produces a signal modulated onto a television broadcast wave or a signal of a particular vacant channel in a very high frequency (VHF) television band. This signal is supplied to an output terminal 20.

Accordingly, if the signal developed at the output terminal 20 is supplied to the antenna terminal of an ordinary domestic television receiver, the satellite television broadcast can be viewed using the receiver set to the particular vacant channel.

In such a system, the parabolic antenna 1 must be adjusted so as to face the artificial satellite very accurately. The order of accuracy required is tenths of a degree, for example, 30.5°. The direction of the antenna 1 is usually adjusted while inspecting the input level of the received signal, and a special measuring apparatus is used to achieve the required high accuracy. In addition, when the direction of the antenna 1 for receiving the satellite broadcast signal is adjusted, it is necessary to adjust not only the azimuth angle thereof but also the elevation angle thereof. Adjustment is therefore time-consuming and difficult.

US Patent Specification US—A—3 710 016 discloses a broadcast receiver generally in accordance with the pre-characterizing portion of claim 1. The receiver comprises a rod-shaped antenna for use indoors. US Patent Specification US—A—3 671 969 discloses a holding circuit for use in automatically adjusting the rotational position of an antenna to correspond to the maximum signal strength position.

According to the present invention there is provided a broadcast receiving system comprising a broadcast receiver and an antenna for receiving a broadcast signal, the system comprising:

a signal input terminal to which a signal from said antenna is supplied through a signal cable;

a demodulating circuit for demodulating the input signal at said signal input terminal into a television signal;

a level detecting circuit for detecting the signal level at said signal input terminal;

a display generator for developing video signals responsive to the output signal from said level detecting circuit; and

signal superimposing means for superimposing an output signal from said display generator on an output signal from said demodulating circuit, whereby the input signal level at said input terminal is displayed on a television picture screen;

characterized by:

a peak value holding circuit which holds the maximum value of the output level of said level detecting circuit and supplies the held level to said display generator whereby an output level from said peak value holding circuit and the current output level are simultaneously supplied and displayed; and by

said antenna being a parabolic antenna movable in azimuth and elevation, and installed outdoors for receiving said broadcast signal directly from a stationary artificial satellite.

The invention will now be described by way of example with reference to the accompanying drawings, throughout which like parts are referred to by like references, and in which:

Figure 1 is a block diagram of an example of a previously proposed satellite broadcast receiving system;

Figure 2 is a frequency diagram of a satellite broadcast signal;

Figure 3 is a block diagram of part of an embodiment of direct satellite broadcast receiving system according to the present invention;

Figure 4 is a diagram showing an example of a display apparatus used in the embodiment; and

Figure 5 is a diagram showing another example of a display apparatus used in the embodiment.

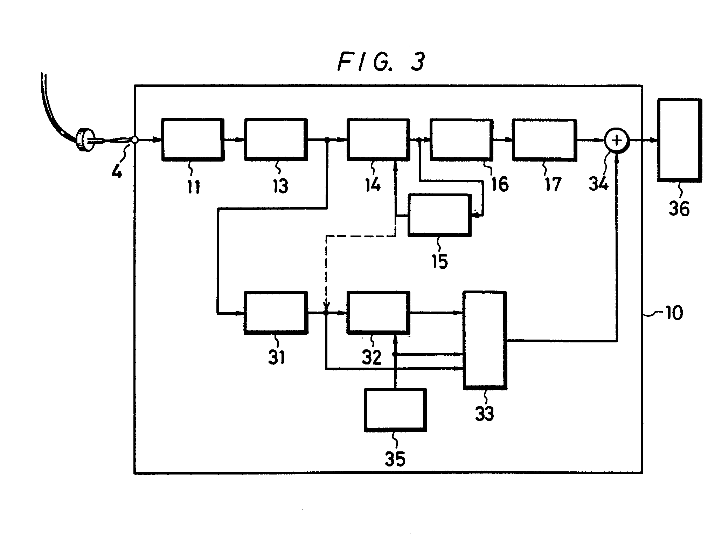

Referring to Figure 3, the embodiment of direct satellite broadcast receiving system to be described comprises an input terminal 4 which is provided in the indoor unit 10. The SHF signal received by the parabolic receiving antenna 1 is amplified and converted by the S—U converter 2 and supplied through the coaxial cable 3 to the input terminal 4. Since the input terminal 4 is provided prior to the AGC amplifier 4, the amplitude (or potential at the pedestal portion) of the signal fed to the input terminal 4 has not yet been stabilized, and therefore fluctuates depending on the direction of the antenna 1. That is, when the antenna 1 is oriented in the optimum direction, the level of the signal at the input terminal 4 becomes the maximum value. Accordingly, if the level of the signal at the input terminal 4 or at a point where the signal level is proportional to the level of the signal at the input terminal 4 is detected, and the azimuth angle and the elevation angle of the antenna 1 are adjusted so as to make the value of the level a maximum, the antenna 1 is set in the optimum direction.

In the embodiment of Figure 3, the output signal from the band-pass filter 13, by way of example, is supplied to a level detector 31 thereby indirectly to detect the level of the signal at the input terminal 4. Instead of using the level detector 31, the AGC voltage supplied to the AGC amplifier 15 may be used indirectly to detect the level of the signal at the input terminal 4. The detected output from the level detector 31 is supplied to a peak value memory circuit 32 and also to a display drive circuit 33. The peak value memory circuit 32 checks the AM-detected output at all times and compares the level of the signal previously stored with the detected level of the received signal at that time. When the detected level is higher then the stored level, the stored content in the memory circuit 32 is rewritten to the higher detected level. Accordingly, the peak (highest) of the received signal levels is always stored in the peak value memory circuit 32. The level stored in the memory circuit 32 is also supplied to the display drive circuit 33.

The display drive circuit 33 includes a character generator, in which an analog input signal derived from the level detector 31 is converted to a corresponding video signal to indicate the level of the input signal as a bar graph or alphanumerically on a television screen. The converted signal therefrom is supplied to one input terminal of a signal superimposing circuit 34. The other input terminal of the signal superimposing circuit 34 is connected to the output terminal of the video amplifier 17. In the signal superimposing circuit 34, the signal from the display drive circuit 33 is superimposed on the video signal from the video amplifier 17 and then supplied to a picture screen of a display apparatus 36 to display the level of the input signal in the form of a graph or alphanumerically. In this case, both of the signals may not always be displayed at the same time, but only the signal from, for example, the display drive circuit 33 may temporarily be displayed on the display apparatus 36 while the antenna 1 is being adjusted in position.

A reset circuit 35 controls the operations of the peak value memory circuit 32 and the display drive circuit 33. Upon adjusting the direction of the antenna 1, when a button (not shown) provided in connection with the reset circuit 35 is operated, the reset circuit 35 produces a set signal by which the memory circuit 32 and the display drive circuit 33 are both set to the operational mode. Next, when the direction of the antenna 1 has been adjusted and the setting of the antenna 1 has been completed, the button is again depressed to allow the reset circuit 35 to produce the reset signal by which the operational modes of the memory circuit 32 and the display drive circuit 33 are ended to clear the content of the memory circuit 32. At this time, the display on the picture screen disappears. As described above, when the antenna 1 is being set, not only the input signal level at any given time but also the maximum level of the input signal up to that time are displayed on the display apparatus 36 by the display drive circuit 33.

The display apparatus 36 may be the cathode ray tube of an ordinary television receiver which is connected to the antenna 1, or a monitor receiver provided independently from the indoor unit 10. Also it is possible to use a special television receiver which is provided intergrally with the indoor unit 10.

In the embodiment of Figure 3, although the band-pass filter 21, demodulating circuit 22, digital decoder 23, etc. for providing the analog audio signal are not shown in the figure, they are of course provided as in the example of Figure 1.

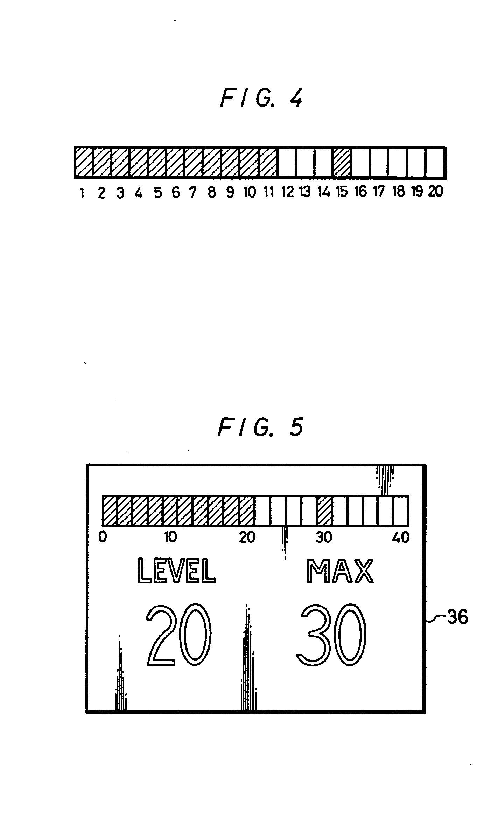

Figure 4 shows an example of the display pattern on the display apparatus 36, in which twenty steps or levels from level "1" to level "20" can be displayed. Hatched portions represent portions which are brilliantly illuminated, and Figure 4 shows a case in which the input signal level at that time is "11" and the peak level up to that time is "15".

The dirction of the antenna 1 can be adjusted by using the display as follows.

Since the position of the artificial satellite is known, the azimuth angle and the elevation angle of the antenna 1 at the site where the antenna 1 is installed are roughly determined. Changing, for example, the azimuth angle of the antenna 1 from this position, a peak value of the azimuth angle of the antenna 1 when receiving the strongest signal is stored and then displayed on the display apparatus 36. The antenna 1 is then rotated in the opposite direction so as to get the peak value and then to detect the azimuth angle at which the input signal level becomes coincident with the peak value. When that position is detected, then at that detected azimuth angle, the elevation angle of the antenna 1 is changed until the elevation angle at which the peak value is obtained is similarly detected and displayed by the display apparatus 36. When that elevation angle is detected, changing the azimuth angle of the antenna 1 at that elevation angle, the position at which the peak value is further increased is found. Repeating this sequence a series of times, the azimuth angle and the elevation angle of the antenna 1 at which the optimum receiving direction of the antenna 1 is established can be detected.

The display is provided on the picture screen and may also be displayed on the front panel portion of the indoor unit 10 by using a light emitting diode display or a phosphor display tube.

Figure 5 is a diagram showing another example of the display apparatus 36. In the example of Figure 5, a bar graph is used and together with this bar graph, the numerical value of the level is displayed. Alternatively, only the numerical value may be displayed.

Thus, as described, since the input level of the received signal and the peak level thereof are displayed on the picture screen of the cathode ray tube, the optimum receiving direction of the satellite broadcast receiving antenna can be adjusted very easily in a short time, because the peak value is known. Thus, without using any special measuring apparatus, even an amateur viewer can adjust the receiving direction of the satellite broadcast receiving antenna.

Moreover, when the input level of the received signal is displayed on the picture screen, a large display is possible without the use of special display elements. In addition, it may be possible to use a character generator provided for displaying the channel number on the picture screen.

## Claims

1. A broadcast receiving system comprising a broadcast receiver and an antenna (1) for receiving a broadcast signal, the system comprising;
a signal input terminal (4) to which a signal from said antenna (1) is supplied through a signal cable (3);
a demodulating circuit (16) for demodulating the input signal at said signal input terminal (4) into a television signal;
a level detecting circuit (31) for detecting the signal level at said signal input terminal (4);
a display generator (33) for developing video signals responsive to the output signal from said level detecting circuit (31); and
signal superimposing means (34) for superimposing an output signal from said display generator (33) on an output signal from said demodulating circuit (16), whereby the input signal level at said input terminal (4) is displayed on a television picture screen (36);
characterized by:
a peak value holding circuit (32) which holds the maximum value of the output level of said level detecting circuit (31) and supplies the held level to said display generator (33) whereby an output level from said peak value holding circuit (32) and the current output level are simultaneously supplied and displayed; and by
said antenna (1) being a parabolic antenna (1) movable in azimuth and elevation, and installed outdoors for receiving said broadcast signal directly from a stationary artificial satellite.

2. A system according to claim 1 wherein said signal level is displayed on said picture screen (36) as a bar graph.

3. A system according to claim 1 wherein said signal level is displayed on said picture screen (36) as a numeral.

4. A system according to claim 1, claim 2 or claim 3 wherein said level detecting circuit (31) uses an automatic gain control voltage from said demodulating circuit (16) to detect said signal level at said signal input terminal (4).

5. A system according to any one of the preceding claims wherein when said input signal level is displayed on said picture screen (36) the video signal of said television signal is blanked.

6. A system according to any one of claims 1 to 4 wherein when said input signal level is displayed on said picture screen, it is superimposed on the video signal of said television signal.

## Patentansprüche

1. Rundfunkempfangssystem mit einem Rundfunkempfänger und einer Antenne (1) für den Empfang eines Rundfunksignals
mit einem Signaleingang (4), dem von der Antenne (1) über ein Signalkabel (3) ein Signal zugeführt wird,
mit einer Demodulatorschaltung (16) zur Demodulation des an dem Signaleingang (4) anliegenden Eingangssignals in ein Fernsehsignal,

mit einer Pegeldetektorschaltung (31) zur Erfassung des Signalpegels an dem Signaleingang (4),

mit einem Displaygenerator (33) zur Erzeugung von dem Ausgangssignal der Pegeldetektorschaltung (31) entsprechenden Videosignalen

sowie mit einer Signalüberlagerungseinrichtung (34), die das Ausgangssignal des Displaygenerators (33) dem Ausgangssignal der Demodulatorschaltung (16) überlagert, wodurch der Pegel des an dem Signaleingang (4) anliegenden Eingangssignals auf einem Fernsehbildschirm (36) dargestellt wird,

dadurch gekennzeichnet,

daß eine Spitzenwert-Halteschaltung (32) vorgesehen ist, die den Maximalwert des Ausgangspegels der Pegeldetektorschaltung (31) festhält und diesen festgehaltenen Pegelwert dem Displaygenerator (33) zuführt, wodurch der Ausgangspegel der Spitzenwert-Halteschaltung (32) und der momentane Ausgangspegel simultan zugeführt und angezeigt werden,

und daß die Antenne (1) eine im Freien installierte, in Azimut- und Elevationsrichtung bewegbare Parabolantenne (1) für den Direktempfang des genannten Rundfunksignals von einem stationären künstlichen Satelliten ist.

2. System nach Anspruch 1, bei dem der Signalpegel auf dem Bildschirm (36) als Balkendiagramm dargestellt wird.

3. System nach Anspruch 1, bei dem der Signalpegel auf dem Bildschirm (36) als Zahlenwert dargestellt wird.

4. System nach Anspruch 1, 2 oder 3, bei dem die Pegeldetektorschaltung (31) zur Erfassung des Signalpegels an dem Signaleingang (4) eine aus der Demodulatorschaltung (16) kommende Steuerspannung zur automatischen Verstärkungssteuerung verwendet.

5. System nach einem der vorhergehenden Ansprüche, bei dem das Videosignal des Fernsehsignals ausgetastet wird, wenn auf dem Bildschirm (36) der Signalpegel des Eingangssignals dargestellt wird.

6. System nach einem der Ansprüche 1 bis 4, bei dem der Signalpegel des Eingangssignals bei der Darstellung auf dem Bildschirm dem Videosignal des Fernsehsignals überlagert wird.

**Revendications**

1. Systéme de réception de diffusion comportant un récepteur de diffusion et une antenne (1) des tinés à recevoir un signal diffusé, le système comportant:

une borne d'entrée de signaux (4) à laquelle un signal provenant de ladite antenne (1) est appliqué par un câble de signaux (3);

un circuit de démodulation (16) destiné à démoduler le signal d'entrée à ladite borne d'entrée de signaux (4) en un signal de télévision;

un circuit de détection de niveau (31) destiné à dètecter le niveau du signal à ladite borne d'entré de signaux (4);

un générateur de visualisation (33) destiné à développer des signaux vidéo en fonction du signal de sortie dudit circuit de détection de niveau (31); et

un dispositif de superposition de signaux (34) destiné à superposed un signal de sortie provenant dudit générateur de visualisation (33) sur un signal de sortie dudit circuit de démodulation (16) de manière que le niveau du signal d'entrée à ladite borne d'entrée (4) soit visualisé sur un écran d'image de télévision (36);

caractérisé par:

un circuit de maintien de valeur de crête (32) qui maintient la valeur maximale de niveau de sortie dudit circuit de détection de niveau (31) et qui fournit ledit niveau maintenu audit générateur de visualisation (33) de manière que le niveau de sortie dudit circuit de maintien de valeur de crête (32) et le niveau de sortie en cours soient fournis et visualisés simultanément; et par

ladite antenne (1) est une antenne parabolique (1) mobile en azimut et en élévation et installée à l'extérieur pour recevoir directement ledit signal diffusé provenant d'un satellite artificiel stationnaire.

2. Système selon la revendication 1, dans lequel ledit niveau du signal est visualisé sur ledit écran d'image (36) comme un graphe à bâtonnets.

3. Système selon la revendication 1, dans lequel ledit niveau du signal est visualisé sur ledit écran d'image (36) sous la forme d'un chiffre.

4. Système selon la revendication 1, la revendication 2 ou la revendication 3, dans lequel ledit circuit de détection de niveau (31) utilise une tension de commande automatique de gain provenant du circuit de démodulation (16) pour détecter ledit niveau du signal à ladite borne d'entrée de signaux (4).

5. Système selon l'une quelconque des revendications précédentes, dans lequel, lorsque ledit niveau du signal d'entrée est visualisé sur ledit écran d'image (36), le signal vidéo dudit signal de télévision est bloqué.

6. Système selon l'une quelconque des revendications 1 à 4, dans lequel, lorsque ledit niveau du signal d'entrée est visualisé sur ledit écran d'image, il est superposé sur le signal vidéo dudit signal de télévision.

*FIG. 1*

*FIG. 2*

# FIG. 3

## F I G. 4

| | | | | | | | | | | | | | | | | | | | |
|---|---|---|---|---|---|---|---|---|---|---|---|---|---|---|---|---|---|---|---|

1  2  3  4  5  6  7  8  9  10  11  12 13  14 15  16  17  18  19 20

## F I G. 5

LEVEL          MAX

20          30

~36